# EUROPEAN PATENT SPECIFICATION

(11) **EP 1 790 879 B1**
(45) Date of publication and mention of the grant of the patent: **13.10.2010**
(21) Application number: 06076547.6
(22) Date of filing: 08.08.2006
(51) Int. Cl.: F16H 61/36, F16H 63/20

(54) **Manual transmission**
Handschaltgetriebe
Boîte de vitesses à commande manuelle

(30) Priority: 24.11.2005 JP 2005338896
(43) Date of publication of application: 30.05.2007
(73) Proprietor: AISIN AI Co., Ltd., Nishio-shi, Aichi-ken (JP)
(72) Inventor: Itoh, Atsushi, Nishio-shi, Aichi-ken (JP); Tanaka, Takayuki, Nishio-shi, Aichi-ken (JP)
(74) Representative: Serjeants

(56) References cited:
- JP-A- 6 341 544
- KR-A- 20040 032 395
- US-A- 4 524 634

## Description

### FIELD OF THE INVENTION

This invention relates to a manual transmission. More particularly, the present invention pertains to a manual transmission, which changes shift gears to establish a predetermined shift stage through a select cable and a shift cable in response to a manual operation of a shift lever.

### BACKGROUND

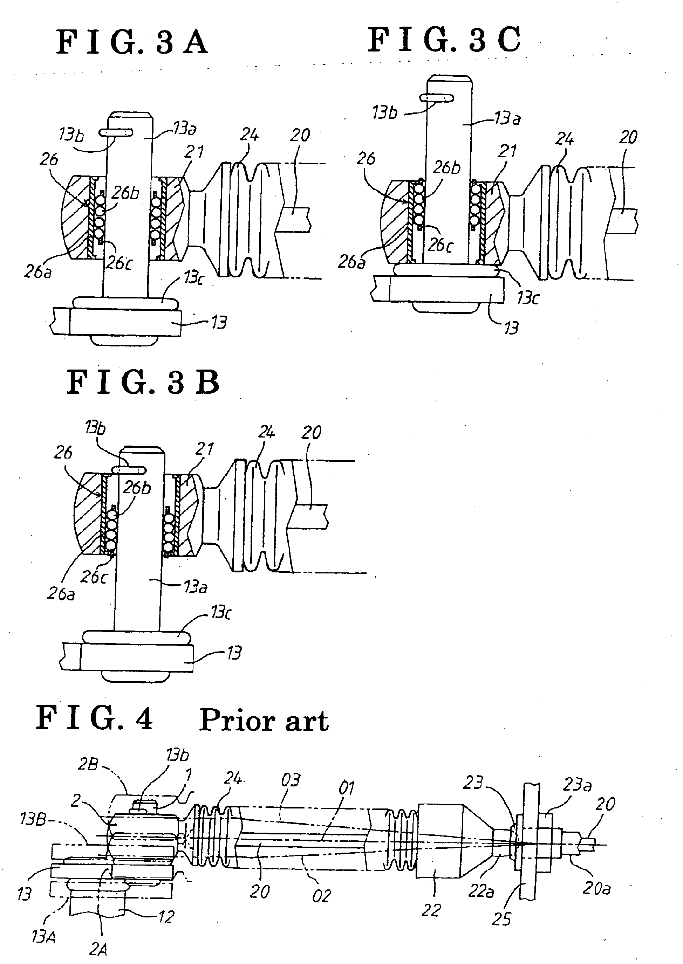

There are transmissions for a front engine front wheel drive (FF) vehicle, or the like, which change shift gears to establish a predetermined shift stage through a select cable and a shift cable in response to a manual operation of a shift lever provided in the vicinity of a driver seat. Some of those manual transmissions select a shift gear out of plural shift gears by reciprocating a selected fork shaft by reciprocating a shift and select shaft in a rotational direction, which is supported by a housing, through the shift cable after the fork shaft is selected out of plural fork shafts by reciprocating the shift and select shaft in an axis line direction through the select cable. The conventional manual transmission of this type includes a shift and select shaft 12, an outer lever 13, an outer lever pin 1, a connecting member 2, a spring pin 13b, a guide member 23, and a shift cable 20 as illustrated in Fig. 4. According to the conventional manual transmission, the outer lever pin 1 extending in parallel with the shift and select shaft 12 is fixed to an end portion of the outer lever 13 which is fixed to an end of the shift and select shaft 12. The connecting member 2 is provided at the outer lever pin 1 in such a manner that the connecting member 2 is rotatable relative to the outer lever pin 1 but its movement is restricted in the axis line direction of the shift and select shaft 12. The connecting member 2 is prevented from being extracted from the outer lever pin 1 by the spring pin 13b. An end portion of the shift cable 20 inserted through the guide member 23 fixed to the housing is connected to the connecting member 2. A shift operation is performed by reciprocating the shift and select shaft 12 in the rotational direction by reciprocating the shift cable 20 in response to an operation of the shift lever. The illustrated manual transmission further includes a boot retainer 22 and a rubber boot 24. The boot retainer 22 is provided at the guide member 23 into which the shift cable 20 is inserted. The rubber boot 24, by which the shift cable 20 is covered, is provided between the boot retainer 22 and the connecting member 2. Although the above described technology is well known as manufactured articles, the reference disclosing such structure has not been found.

According to the aforementioned manual transmission, the connecting member 2 is rotatable relative to the outer lever pin 1 but its movement is restricted in the axis line direction of the shift and select shaft 12. Therefore, when the shift and select shaft 12 moves in a first axis line direction, the outer lever 13 moves from a position indicated by a full line shown in Fig. 4 to a position indicated by a two-dot chain line 13A shown in Fig. 4, and the connecting member 2 moves from a position indicated by a full line shown in Fig. 4 to a position indicated by a two-dot chain line 2A shown in Fig. 4. On this occasion, because the guide member 23 does not move, a central line of the shift cable 20, which is placed closer to the connecting member 2 relative to the guide member 23, is bent from a straight line state indicated by a chain line O1 shown in Fig. 4 to a state indicated by a two-dot chain line 02 shown in Fig. 4. In contrast, when the shift and select shaft 12 moves in a second direction in the axis line direction, the connecting member 2 moves from the position indicated by the full line shown in Fig. 4 to a position indicated by a three-dot chain line 2B shown in Fig. 4 and the central line of the shift cable 20 is bent from the straight line state indicated by the chain line O1 shown in Fig. 4 to a state indicated by a three-dot chain line 03 shown in Fig. 4. The shift cable 20, made of plural steel wires twisting together, is flexible but includes considerable degree of flexural rigidity. Therefore, if the shift cable 20 is bent as described above, the connecting member 2 is applied with a considerable degree of elastic reaction in the axis line direction because of the flexural rigidity of the shift cable 20.

US 4 524 634 constitutes the closest prior art.

Generally, the manual transmission requires reduction in operation and hysteresis in order to improve an operation feeling. However, with the configuration of the above described manual transmission, load for a select operation of the shift lever required for moving the outer lever 13 from the position indicated by the full line shown in Fig. 4 to each position indicated by chain lines 13A and 13B shown in Fig. 4 is increased corresponding to an amount of the elastic reaction because of a bending of the shift cable 20. In contrast, load for the select operation of the shift lever required for returning the outer lever 13 to the position indicated by the full line shown in Fig. 4 is decreased corresponding to an amount of the elastic reaction. Therefore, there may be a danger of lowering the operation feeling because of an increase in the operation load and the hysteresis during the select operation.

The present invention has been made in view of the above circumstances, and provides a manual transmission, a shift cable of which is not bent during a select operation.

### SUMMARY OF THE INVENTION

According to an aspect of the present invention, a manual transmission includes a shift and select shaft supported by a housing and reciprocatable in an axis line direction and a rotational direction, an outer lever fixed to a first end of the shift and select shaft at a base portion thereof, an outer lever pin fixed to an end portion of the outer lever, a connecting member rotatably attached to the outer lever pin, a shift cable an end of which is connected to the connecting member via a guide member secured to the housing, and the connecting member being connected to the outer lever pin through the bearing member so as to be movable in the axis line direction corresponding to an amount of a travel distance of the shift and select shaft in the axis line direction.

According to the present invention, the frictional force generated between the connecting member and the outer lever pin is significantly reduced by means of the ball bearing which allows the axial movement and rotational movement of the connecting member. Accordingly, the operation load and hysteresis at the time of the select operation becomes smaller and the operation feeling of the shift operation can be improved.

### BRIEF DESCRIPTION OF THE DRAWINGS

The foregoing and additional features and characteristics of the present invention will become more apparent from the following detailed description considered with reference to the accompanying drawings, wherein:

Fig. 1 is a sectional view illustrating a whole structure of a manual transmission according to an embodiment of the present invention;

Fig. 2 is a sectional view taken along line II-II of Fig. 1;

Fig. 3A is an enlarged partial view illustrating a condition where the connecting member is placed at a neutral position;

Fig. 3B is an enlarged partial view illustrating a condition where the connecting member is moved upward;

Fig. 3C is an enlarged partial view illustrating a condition where the connecting member is moved downward; and

Fig. 4 is an enlarged partial view indicating a structure and an operation in the vicinity of a connecting part of a connecting member and an outer lever according to a related art.

### DETAILED DESCRIPTION

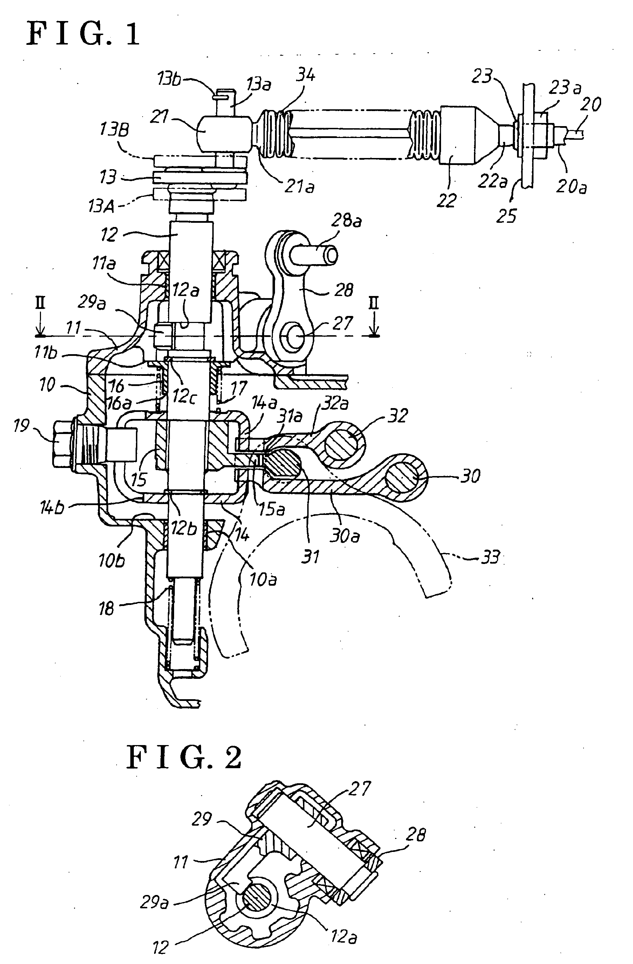

An embodiment of the present invention will be explained hereinbelow with reference to Figs. 1-3. As illustrated in Figs. 1 and 2, a manual transmission includes a main housing 10 and a sub housing 11 which are fixed with each other by screw cramp, or the like. A gear transmission (not shown) and shifting devices 30-33 for performing a shift operation of the gear transmission are provided in the main housing 10. A shift and select shaft 12, an interlock member 14, and a shift head member 15 for activating the shifting devices 30-33 are provided in the housings 10 and 11.

As illustrated in Fig. 1, three fork shafts 30, 31, and 32 arranged in parallel to one another in the main housing 10 are slidably supported in a direction of an axis line perpendicular to a sheet of Fig. 1. Each shift fork 33 (only one of three shift forks is indicated by a two-dot chain line in Fig. 1) for changing the shift gear by engaging with a part of the gear transmission such as a clutch hub sleeve of a synchromesh mechanism (not shown), is fixed to each the fork shafts 30, 31, and 32. Each shift head 30a, 31a, and 32a integrally provided at each fork shaft 30, 31, and 32 is extending towards the shift and select shaft 12 in such a manner that the shift heads 30a, 31a, and 32a are arranged substantially in parallel to one another. An end portion of each shift head 30a, 31a, and 32a is approximately identical in thickness and width. As illustrated in Fig. 1, each end portion of the shift heads 30a, 31a, and 32a overlaps one another, leaving some space therebetween, and is formed with a substantial U-shaped cutout portion which opens towards the shift and select shaft 12. Each cutout portion of each end portion of the shift heads 30a, 31a, and 32a is identical in size.

As illustrated in Fig. 1, the shift and select shaft 12 is arranged perpendicular to each fork shaft 30, 31, and 32 and is supported by means of bearings 10a and 11a. The shift and select shaft 12 is slidable in an axis line direction thereof and is rotatable. The bearing 10a is provided at the main housing 10 and the bearing 11a is provided at the sub housing 11, and there is a predetermined space between the bearings 10a and 11a in the axis line direction of the shift and select shaft 12. A base portion of an outer lever 13 protruded in a radial direction is fixed, by clinching means, to a first end portion of the shift and select shaft 12 protruded outward from the sub housing 11. An outer lever pin 13a extending in parallel with the shift and select shaft 12 is fixed to an end portion of the outer lever 13 by the clinching means. A groove portion 12a is formed at a part of the shift and select shaft 12 placed inside of the sub housing 11.

As illustrated in Fig. 1, a shift head member 15 and an interlock member 14 are provided at a part of the shift and select shaft 12 placed inside of the main housing 10. The shift head member 15 is splined to the shift and select shaft 12 and is fixed by means of a pin, or the like. A head portion 15a is formed at a part of an outer circumference of the shift head member 15 and is protruded in a radial direction towards shift heads 30a, 31a, and 32a. The head portion 15a of the shift head member 15 and each end portion of each shift head 30a, 31a, and 32a are substantially identical in thickness. The interlock member 14 made by bending a plate material into a substantial U-shape includes side portions formed in parallel with each other. A space between the side portions in the axis line direction is wider than a thickness of the shift head member 15. The interlock member 14 is supported by the shift and select shaft 12 by rotatably engaging therewith at openings respectively formed at side portions of the interlock member 14. A relative movement of the interlock member 14 and the shift head member 15 is restricted by contacting an inner surface of a first side portion of the interlock member 14 with a snap ring 12b provided at the shift and select shaft 12 and by contacting an inner surface of a second side portion of the interlock member 14 with an end surface of the shift head member 15. Each end portion 14a continuously formed from each side portion of the interlock member 14 is bent inwardly. Between each tip portion of the end portions 14a facing each other, a space is provided which is larger than a thickness of the head portion 15a of the shift head member 15, to some degree. A position of the space between each tip portion of the end portions 14a agrees with a position of the head portion 15a of the shift head member 15 in the axis line direction. The end portion 14a of the interlock member 14 and the head portion 15a of the shift head member 15 are identical in width. Both of the end portion 14a and the head portion 15a are engageable with each U-shaped cutout portion of each end portion of the shift heads 30a, 31a, and 32a by leaving some space therebetween. The interlock member 14 includes an opening portion 14b, which has a predetermined width and is formed at a back portion of the interlock member 14. A rotation of the interlock member 14 relative to the main housing 10 is restricted by engaging the opening portion 14b with a baffle 19 which is screwed and fixed to the main housing 10.

A flange color 16 is slidably engaged with a part of the shift and select shaft 12 placed closer to the groove portion 12a relative to the interlock member 14. The flange color 16 is biased by means of a first spring 17 towards the groove portion 12a and, under a free state, the flange color 16 is stopped in contact with a snap ring 12c provided at the shift and select shaft 12. The first spring 17 is provided between the flange color 16 and the interlock member 14. The shift and select shaft 12 is biased by means of a second spring 18 towards the outer lever 13. The second spring 18 is provided between the main housing 10 and a stepped portion of the shift and select shaft 12. The stepped portion is formed at a second end portion of the shift and select shaft 12, i.e., the stepped portion is formed at the shift and select shaft 12 at an opposite side of the outer lever 13. Therefore, under the free state, the flange color 16 is stopped at a neutral position in which a flange surface of the flange color 16 is in contact with an inner end surface 11b of the sub housing 11 and the head portion 15a of the shift head member 15 is engaged with the substantial U-shaped cutout portion of the end portion of the second shift head 31a.

As illustrated in Figs. 1 and 2, a select shaft 27 is rotatably supported by the sub housing 11 at a position corresponding to the groove portion 12a in such a manner that the select shaft 27 is arranged perpendicular to the shift and select shaft 12. A select lever 28, protruded in a radial direction of the select shaft 27, is fixed, by the clinching means, to the select shaft 27 at an end portion thereof protruded from the sub housing 11. A select arm 29 is fixed to a part of the select shaft 27 placed inside of the sub housing 11 by means of a pin, or the like. An end portion 29a of the select arm 29 is engaged with the groove portion 12a of the shift and select shaft 12. A select lever pin 28a extending in parallel with the select shaft 27 is fixed to an end portion of the select lever 28 by the clinching means. The select lever 28 is reciprocated in a rotational direction in response to a manual operation of a shift lever provided in the vicinity of a driver seat through a select cable (not shown, the structure of which is practically identical to that of a shift cable 20 described below) connected to the select lever pin 28a. Accordingly, the shift and select shaft 12 is reciprocated in the axis line direction.

When the select lever 28 is rotated in a first direction, the select shaft 27 and the select arm 29 rotate in the first direction. On this occasion, the shift and select shaft 12 moves a downward direction in Fig. 1 through the groove portion 12a engaged with the end portion 29a of the select arm 29 and is stopped in a condition where the first side portion of the interlock member 14 is in contact with an inner surface 10b of the main housing 10. In this state, the head portion 15a of the shift head member 15 is engaged with the substantial U-shaped cutout portion of the end portion of the first shift head 30a and the outer lever 13 is moved to a position indicated by a two-dot chain line 13A shown in Fig. 1. In contrast, when the select lever 28 is rotated in a second direction, the shift and select shaft 12 moves in an upward direction in Fig. 1 and is stopped in a condition where the second side portion of the interlock member 14 is in contact with an end surface 16a of the flange color 16. In this state, the head portion 15a of the shift head member 15 is engaged with the substantial U-shaped cutout portion of the end portion of the third shift head 32a and the outer lever 13 is moved to a position indicated by a three-dot chain line 13B shown in Fig. 1.

A structure for reciprocating the shift and select shaft 12 in the rotational direction in response to an operation of the shift lever will be described hereinafter with reference to Figs. 1 and 3. A connecting member 21 is connected to an end of the shift cable 20 which is reciprocated in response to the operation of the shift lever. The connecting member 21 is movably attached to the outer lever pin 13a of the outer lever 13 through a ball bearing 26 (a bearing member with a lower degree of friction coefficient). The ball bearing 26 allows an axial movement and a rotational movement of the connecting member 21 and the connecting member 21 is movable in the axis line direction corresponding to an amount of a travel distance of the shift and select shaft 12 in the axis line direction. The connecting member 21 is prevented from being extracted from the outer lever pin 13a by a spring pin 13b. The ball bearing 26 includes an outer race 26a, balls 26b, and a retainer 26c. The outer race 26a is formed into a substantial tubular shape and includes a length identical to that of the connecting member 21 in the axis line direction. The balls 26b rotate at an inner surface of the outer race 26a of the ball bearing 26. The retainer 26c supports the balls 26b so that the balls 26b are not spread in the axis line direction and are not separated inwardly. An outer surface of the outer race 26a is press-fitted and fixed to an inner surface of the connecting member 21. In a condition where the outer lever pin 13a is inserted through the ball bearing 26 as illustrated in Fig. 3, each ball 26b is brought into rolling contact with the inner surface of the outer race 26a and an outer surface of the outer lever pin 13a. An entire length of the plural balls 26b in the axial direction which are supported by the retainer 26c is about a half of an entire length of the outer race 26a. As illustrated in Fig. 3B, when the connecting member 21 is moved upward, the balls 26b come in contact with a first folded portion formed at a first end of the outer race 26a, the first folded portion being folded towards the outer lever pin 13a. As illustrated in Fig. 3C, when the connecting member 21 is moved downward, the balls 26b come in contact with a second folded portion formed at a second end of the outer race 26a, the second folded portion being folded towards the outer lever pin 13a. Therefore, frictional resistance in a condition where the outer lever pin 13a is moved in the axis line direction relative to the connecting member 21 becomes significantly small until the balls 26b come in contact with each folded portion formed at both ends of the outer race 26a in accordance with a movement of the connecting member 21 relative to the outer lever pin 13a corresponding to an amount of the entire length of the balls 26b. It is because the frictional resistance at this moment corresponds to a rotational friction of the balls 26b. According to the embodiment of the present invention, dimension of each component is designed so that a travel distance of the connecting member 21 relative to the outer lever pin 13a becomes identical to the travel distance of the shift and select shaft 12 in the axis line direction.

A guide member 23 is assembled to a bracket 25 fixed to the housings 10 and 11. A first end of the shift cable 20 is extended through a central hole of the guide member 23 and a second end of the shift cable 20 is connected to the shift lever provided in the vicinity of the driver seat. The shift and select shaft 12 is elastically biased in a rotational direction by a torsion spring (not shown). When the shift cable 20 is pulled by the shift lever, which is connected to the second end of the shift cable 20, the shift and select shaft 12 rotates in a first direction against an elastic biasing force of the torsion spring. In contrast, when the shift cable 20 is released, the shift and select shaft 12 rotates in a second direction. Accordingly, the shift operation is performed. An end portion 22a of a boot retainer 22 through which the shift cable 20 is inserted is in contact with the guide member 23 at a side of the connecting member 21. The end portion 22a of a boot retainer 22 is in contact with the guide member 23 through a spherical seat which can be oscillated in all directions. A rubber boot 24 for covering the shift cable 20 is provided between the boot retainer 22 and a retainer seat 21a formed at the connecting member 21.

An operation of the manual transmission according to the embodiment of the present invention is described hereinafter. Under a neutral state of the transmission, an axial position of the shift and select shaft 12 is placed at a neutral position as illustrated in Fig. 1 and a rotational position of the shift and select shaft 12 is placed at a neutral position in which the head portion 15a of the shift head member 15 corresponds to the end portion 14a of the interlock member 14. In this state, the connecting member 21 is placed at a middle part of the outer lever pin 13a in a longitudinal direction as indicated by a full line shown in Fig. 1 and as illustrated in Fig. 3A. When the shift lever is operated in a first select direction from the neutral position, the select lever 28 rotates in a first direction through the select cable. On this occasion, the shift and select shaft 12 moves the downward direction in Fig. 1 and is stopped in a condition where the first side portion of the interlock member 14 is in contact with the inner surface 10b of the main housing 10 and the head portion 15a of the shift head member 15 is engaged with the cutout portion of the end portion of the first shift head 30a. In this state, when the shift lever is operated in a first shift direction, the outer lever 13 and the shift and select shaft 12 rotate in a first direction through the shift cable 20. On this occasion, the first fork shaft 30 is shifted to a first direction through the head portion 15a of the shift head member 15 and one of shift gear out of the plural shift gears is selected to establish a first predetermined shift stage. In contrast, when the shift lever is operated in a second shift direction, the first fork shaft 30 is shifted to a second direction through the head portion 15a of the shift head member 15 and the other one of shift gear out of the plural shift gears is selected to establish a second predetermined shift stage.

Then, the shift and select shaft 12 is returned to a central position in the axis line direction by rotating the select lever 28 in the second direction in response to the operation of the shift lever after the shift and select shaft 12 is returned to a central position in the rotational direction in response to the operation of the shift lever. On this occasion, when the outer lever 13 and the shift and select shaft 12 are rotated in the first direction in a condition where the head portion 15a of the shift head member 15 is engaged with the cutout portion of the end portion of the second shift head 31 a, a next shift gear out of the plural shift gears is selected through the second fork shaft 31 to establish a next predetermined shift stage. Then, the shift and select shaft 12 is returned to the central position in the rotational direction in response to the operation of the shift lever, the select lever 28 is rotated in the second direction in response to the shift lever, and the shift and select shaft 12 is stopped at a position in which the interlock member 14 is in contact with the end surface 16a of the flange color 16. On this occasion, when the shift and select shaft 12 is rotated in the first direction in a condition where the head portion 15a of the shift head member 15 is engaged with the cutout portion of the end portion of the third shift head 32a, a next shift gear out of the plural shift gears is selected to establish a next predetermined shift stage. In contrast, when the shift and select shaft 12 is rotated in the second direction, a further next shift gear out of the plural shift gears is selected to establish a further next predetermined shift stage. Then, when the shift and select shaft 12 is returned to the central position in the axis line direction by rotating the select lever 28 in the first direction after the shift and select shaft 12 is returned to the central position in the rotational direction, the transmission is returned to the neutral state as illustrated in Fig. 1.

During the aforementioned operation, when the shift and select shaft 12 moves downward from the neutral position in response to the operation of the shift lever, the outer lever 13 and the outer lever pin 13a move downward. On this occasion, because of frictional force between the outer lever pin 13a and the connecting member 21, the connecting member 21 moves downward and tries to bend the shift cable 20. However, if elastic reaction force generated because of bending of the shift cable 20 becomes larger than the axial frictional force of the ball bearing 26 provided between the connecting member 21 and the outer lever pin 13a, the connecting member 21 moves upward relative to the outer lever pin 13a. As described above, the frictional force of the ball bearing 26 is significantly small. Because the shift cable 20 is hardly bent as illustrated in Fig. 3B, the elastic reaction force applied to the connecting member 21 does not increase any further. Therefore, the elastic reaction force generated because of the bending of the shift cable 20 is considerably smaller than the conventional manual transmission including the connecting member 2 provided at the outer lever pin 1, the connecting member 2 being rotatable but being restricted an axial movement thereof. Accordingly an operation load required for the select operation can be reduced. Further, in a condition where the shift and select shaft 12 moves upward to return to the neutral position from a position in which the interlock member 14 is in contact with the inner surface 10b, because of frictional force between the outer lever pin 13 a and the connecting member 21, the connecting member 21 moves upward and tries to bend the shift cable 20. However, if the elastic reaction force generated because of the bending of the shift cable 20 becomes larger than the axial frictional force of the ball bearing 26 provided between the connecting member 21 and the outer lever pin 13a, the connecting member 21 moves downward relative to the outer lever pin 13a. Because the shift cable 20 is hardly bent, an operation load required for operating the shift and select shaft 12 upward is almost the same as the operation load required for operating the shift and select shaft 12 downward. Accordingly, hysteresis during downward and upward operations of the shift and select shaft 12 can be reduced.

When the shift and select shaft 12 moves upward from the neutral position, because of frictional force between the outer lever pin 13a and the connecting member 21, the connecting member 21 moves upward and tries to bend the shift cable 20. However, if the elastic reaction force generated because of the bending of the shift cable 20 becomes larger than the axial frictional force of the ball bearing 26 provided between the connecting member 21 and the outer lever pin 13a, the connecting member 21 moves downward relative to the outer lever pin 13a. Because the elastic reaction force generated because of the bending of the shift cable 20 is small, the operation load required for the select operation and the hysteresis can be reduced. Accordingly, an operation feeling at the time of the shift operation, especially at the time of the select operation can be improved.

According to the embodiment of the present invention, the connecting member 21 is connected to the outer lever pin 13a through the ball bearing 26 which allows the axial movement and rotational movement of the connecting member 21. Therefore, the frictional force between the connecting member 21 and the outer lever pin 13a in the axis line direction and the rotational direction becomes significantly small. Accordingly, the operation feeling at the time of the shift operation, especially at the time of the select operation can be improved. However, the present invention is not limited thereto. Alternatively, or in addition, any bearing member with lower degree of friction coefficient is applicable instead of the ball bearing 26. With such variation, an improvement in the operation feeling of the select operation can also be achieved corresponding to lower level of the axial frictional resistance.

According to the embodiment of the present invention, the travel distance of the connecting member 21 relative to the outer lever pin 13a in the axis line direction is identical to the travel distance of the shift and select shaft 12 in the axis line direction. However, the present invention is not limiter thereto. The present application is applicable when the travel distance of the connecting member 21 relative to the outer lever pin 13a in the axis line direction is approximately the same as the travel distance of the shift and select shaft 12 in the axis line direction in a range in which an increase in the elastic resistant force because of the bending of the shift cable 20 does not cause adverse effects on the operation load required for the select operation. Alternatively, or in addition, the travel distance of the connecting member 21 relative to the outer lever pin 13a in the axis line direction may be longer or shorter than the travel distance of the shift and select shaft 12.

According to the embodiment of the present invention, the connecting member is connected to the outer lever pin through the baring member having the lower degree of the friction coefficient in such a manner that the connecting member is movable in the axis line direction corresponding to an amount of the travel distance of the shift and select shaft. When the shift and select shaft is manually operated in the axis line direction for selecting one of the fork shaft out of three fork shafts, the outer lever and the outer lever pin move and try to bend the shift cable. However, if the elastic reaction force generated because of the bending of the shift cable becomes larger than the axial frictional force generated between the connecting member and the outer lever pin, the connecting member moves in the axis line direction and further bending of the shift cable can be prevented and the elastic reaction force applied to the connecting member does not increase any further. Accordingly, the elastic reaction force becomes significantly smaller than the conventional manual transmission which includes the connecting member provided at the outer lever pin, the connecting member being rotatable but its movement being restricted in the axial direction. Therefore, the operation load and hysteresis at the time of the select operation becomes smaller and the operation feeling of the shift operation can be improved.

According to the embodiment of the present invention, the frictional force generated between the connecting member and the outer lever pin is significantly reduced by means of the ball bearing which allows the axial movement and rotational movement of the connecting member. Accordingly, the operation load and hysteresis at the time of the select operation becomes smaller and the operation feeling of the shift operation can be improved.

## Claims

1. A manual transmission, comprising:
a shift and select shaft (12) supported by a housing, and reciprocatable in an axis line direction and a rotational direction;
an outer lever (13) fixed to a first end of the shift and select shaft at a base portion thereof;
an outer lever pin (13a) fixed to an end portion of the outer lever and extending in parallel with the shift and select shaft;
a connecting member (21) rotatably attached to the outer lever pin;
a shift cable (20) an end of which is connected to the connecting member via a guide member (23) secured to the housing; and
the shift and select shaft being reciprocated in the axis line direction in response to a manual operation for selecting a fork shaft out of plural fork shafts and reciprocated in the rotational direction in response to a manual operation for reciprocating the selected fork shaft, so that a shift gear from among plural shift gears is selected, **characterized in that** the manual transmission further comprising:
a bearing member (26) having a lower degree of frictional coefficient; and
the connecting member being connected to the outer lever pin through the bearing member so as to be movable in the axis line direction corresponding to an amount of a travel distance of the shift and select shaft in the axis line direction.

2. The manual transmission according to claim 1, wherein the shift and select shaft is reciprocated in the axis line direction in response to a manual operation of a select lever (28) and the shift and select shaft is reciprocated in the rotational direction in response to a manual operation of the shift cable.

3. The manual transmission according to claim 1, wherein
the bearing member includes a ball bearing which allows an axial movement and a rotational movement of the connecting member.

## Patentansprüche

1. Handschaltgetriebe, enthaltend:
einen Schalt- und Wählschaft (12), der durch ein Gehäuse gestützt wird, und der in einer Achsenlinienrichtung und einer Rotationsrichtung hin und her beweglich ist;
einen Außenhebel (13), der an einem ersten Ende des Schalt- und Wählschafts an einem Basisbereich davon befestigt ist;
einen Außenhebelstift (13a), der an einem Endbereich des Außenhebels befestigt ist und sich parallel zu dem Schalt- und Wählschaft erstreckt;
ein Verbindungselement (21), das drehbar an dem Außenhebelstift angebracht ist;
ein Schaltkabel (20), von dem ein Ende mit dem Verbindungselement über ein Führungselement (23) verbunden ist, das an dem Gehäuse befestigt ist; und
wobei der Schalt- und Wählschaft in der Achsenlinienrichtung in Abhängigkeit von einer manuellen Betätigung zum Wählen eines Gabelschafts aus einer Mehrzahl von Gabelschäften hin und her bewegt wird und in der Rotationsrichtung in Abhängigkeit von einer manuellen Betätigung zum hin und her Bewegen des gewählten Gabelschafts hin und her bewegt wird, so dass ein Schaltgang aus einer Mehrzahl von Schaltgängen gewählt wird, **dadurch gekennzeichnet, dass** das Handschaltgetriebe weiter enthält:
ein Lagerelement (26), das ein geringeres Maß eines Reibkoeffizienten aufweist; und
wobei das Verbindungselement mit dem Außenhebelstift durch das Lagerelement so verbunden ist, dass es in der Achsenlinienrichtung in Abhängigkeit von einer Menge einer Hubstrecke des Schalt- und Wählschafts in der Achsenlinienrichtung bewegbar ist.

2. Handschaltgetriebe nach Anspruch 1, wobei der Schalt- und Wählschaft in der Achsenlinienrichtung in Abhängigkeit von einer manuellen Betätigung eines Wählhebels (28) hin und her bewegt wird und der Schalt- und Wählschaft in der Rotationsrichtung in Abhängigkeit von einer manuellen Betätigung des Schaltkabels hin und her bewegt wird.

3. Handschaltgetriebe nach Anspruch 1, wobei das Lagerelement ein Kugellager enthält, das eine axiale Bewegung und eine Rotationsbewegung des Verbindungselements ermöglicht.

## Revendications

1. Boîte de vitesse à commande manuelle, comprenant :
un arbre de changement et de sélection de vitesse (12) supporté par un boîtier et pouvant se déplacer alternativement dans une direction de ligne axiale et dans une direction de rotation ;
un levier extérieur (13) fixé à une première extrémité de l'arbre de changement et de sélection de vitesse à une base de celui-ci ;
un pivot de levier extérieur (13a) fixée à une portion d'extrémité du levier extérieur et s'étendant parallèlement à l'arbre de changement et de sélection de vitesse ;
un élément de connexion (21) relié de manière rotative au pivot de levier extérieur ;
un câble de changement de vitesse (20) dont une extrémité est connectée à l'élément de connexion via un élément de guidage (23) fixé au boîtier ; et
l'arbre de changement et de sélection de vitesse étant déplacé alternativement dans la direction de ligne axiale en réponse à une commande manuelle pour sélectionner un arbre à fourche parmi une pluralité d'arbres à fourche et déplacé alternativement dans la direction de rotation en réponse à une commande manuelle pour déplacer alternativement l'arbre à fourche sélectionné, de manière qu'un engrenage de changement de vitesse parmi une pluralité d'engrenages de changement de vitesse soit sélectionné, **caractérisée en ce que** la boîte de vitesse à commande manuelle comprend en outré :
un élément de palier (26) ayant un degré inférieur de coefficient de frottement ; et
l'élément de connexion étant connecté au pivot de levier extérieur par l'intermédiaire de l'élément de palier de manière à être déplaçable dans la direction de ligne axiale de manière correspondante à une quantité d'une distance de course de l'arbre de changement et de sélection de vitesse dans la direction de ligne axiale.

2. Boîte de vitesse à commande manuelle selon la revendication 1, dans laquelle l'arbre de changement et de sélection de vitesse est déplacé alternativement dans la direction de ligne axiale en réponse à une commande manuelle d'un levier de sélection (28) et l'arbre de changement et de sélection de vitesse est déplacé alternativement dans la direction de rotation en réponse à une commande manuelle du câble de changement de vitesse.

3. Boîte de vitesse à commande manuelle selon la revendication 1, dans laquelle
l'élément de palier comprend un palier à billes qui permet un mouvement axial et un mouvement de rotation de l'élément de connexion.
